(19) Europäisches Patentamt / European Patent Office / Office européen des brevets

(11) **EP 4 657 794 A1**

(12) **EUROPEAN PATENT APPLICATION**

(43) Date of publication:
**03.12.2025 Bulletin 2025/49**

(21) Application number: **24382586.6**

(22) Date of filing: **31.05.2024**

(51) International Patent Classification (IPC):
$H04L\ 9/08^{(2006.01)}$    $H04L\ 9/32^{(2006.01)}$
$G02F\ 1/11^{(2006.01)}$    $H01S\ 3/106^{(2006.01)}$

(52) Cooperative Patent Classification (CPC):
**H04L 9/3278; G02F 1/11; H04L 9/0866;**
H04L 2209/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Consejo Superior De Investigaciones
Científicas**
**28006 Madrid (ES)**

(72) Inventors:
• **Martín Sánchez, David
Sevilla (ES)**
• **Brox Jiménez, Piedad
Sevilla (ES)**

(74) Representative: **Pons IP
Glorieta Rubén Darío 4
28010 Madrid (ES)**

(54) **ACOUSTO-OPTIC SYSTEM AND METHOD FOR GENERATING PHYSICAL UNCLONABLE
FUNCTIONS (PUFS)**

(57) An acousto-optic system and method for generating strong physical unclonable functions (PUFs) comprising: one or more coherent optical beam generators, configured to generate each one an optical beam; one or more acoustic wave generators configured to produce acoustic waves, and driven by radiofrequency (RF) control signals; one or more acousto-optic mediums connected to the acoustic wave generators and configured to tune a propagation direction, a wavelength and/or an intensity of the optical beams generated which propagates through said acousto-optic mediums as a function of frequency and amplitude of the acoustic waves, defining the characteristics of the tuned optical beam as a challenge (Ci); one or more scattering mediums configured to scatter the optical beams generated, producing multiple scattered optical beams; and a measuring device to measure the optical beams scattered, generating a speckle pattern as a response (Ri).

EP 4 657 794 A1

## Description

## OBJECT OF THE INVENTION

The invention is related to the field of cybersecurity, more particularly to generation of Physical Unclonable Functions (PUFs).

The object of the invention is an acousto-optic system for generating physical unclonable functions (PUFs) which allows to reduce complexity while maintaining high integrability and reliability, by reducing the number of movable elements. Also, the miniaturization of system of the invention is allowed due to its configuration.

Another object of the invention is a method to generate physical unclonable functions (PUFs) which uses the acousto-optic system.

## BACKGROUND ART

As electronic devices become ubiquitous and services are digitized, more attackers explore the cyberspace looking for vulnerabilities that can be exploited to breach security mechanisms. This entails serious risks to data protection, private networks, and access authentication, affecting the correct operation of a broad range of fields including finance, medicine, and governance.

To provide security in the cyberspace, digital processes rely on secret keys and random numbers that can be used to grant access in authorization protocols and to encrypt information in communications. These secret keys are bit strings that cannot be easily obtained or duplicated by attackers to tamper the system.

In cryptographic systems, the secret keys are usually stored in non-volatile memories. However, this practice requires expensive techniques to protect these memories against invasive attacks.

One alternative is the re-construction of secret keys on-demand by exploiting one-way functions, which are numerical functions whose output is easy to compute for every input but whose input is difficult to invert from any output. This condition allows legitimate users with access to the keys to easily operate a system, while making it unfeasible for attackers.

Physical unclonable functions (PUFs) are the hardware counterparts of the cryptographic primitives that perform one-way functions.

A PUF consists of a physical probe interacting with a physical entity and providing a deterministic output. This output is unique, stable in time (i.e., reliable) and difficult to predict either by computational or physical means (i.e., unclonable). PUFs are used to provide physical identity to digital devices, analogous to fingerprints and DNA to identify individuals, or watermarks and holograms on currency notes to prevent counterfeit.

Commonly, cost-effective implementations of PUFs exploit the random physical disorder or the manufacturing variations that occur in the physical systems. In electronics, there are two main types: memory-based and delay-based PUFs.

Memory-based PUFs, like SRAM-based PUFs, are a mature and viable configuration that exploit the random power-up bias of the individual cells towards '0' or '1'.

On the other hand, delay-based PUFs, like ring oscillators, exploit the statistical delay variations of identical circuits introduced by variabilities during the fabrication process.

However, despite the unclonability of these electronic PUFs, they have been classified as weak, since the underlying physical scrambling mechanism (typically allowing just one possible input for the one-way function) is rather simplistic, making them vulnerable to modelling attacks.

In addition, as research on quantum computing progresses and enables new capabilities for these attacks, weak PUFs cannot be considered a reliable source of identity for the future and alternative methods must be developed.

Strong PUFs act as challenge-response systems in which multiple different inputs can be generated, each one resulting in a unique output. Their security is based on the high complexity to predict their response, which is the result of a complex physical mechanism with high entropy, thus rendering strong PUFs secure against modelling attacks.

In addition, gaining access to a challenge-response pair (CRP), or a sample of CRPs, does not enable the prediction of the response to a different challenge. Hence, a PUF allowing a large set of CRPs prevents a full read-out by any attacker and enables its use as a source of cryptographic keys on demand and as a powerful authentication tool.

The first example of a strong PUF was presented in 2001 by Pappu et al. This PUF used a disordered three-dimensional microstructure as the physical system and coherent optical radiation as the probe. Their interaction resulted in multiple coherent scattering, which can be observed at an output plane as a speckle pattern. Since then, multiple optical PUFs based on the speckle pattern have been proposed, employing a variety of methods to generate the challenges and read the responses.

Some ways to generate multiple challenges consist on changing the incident angle of the probe. Other techniques use translation stages to displace and rotate the PUF and effectively change the distribution of the scatterers. Tuning the wavelength of a laser source can also be used to generate challenges to the optical PUF, as well as the optical power. More elaborated techniques to challenge an optical PUF include the use of a spatial light modulator to modulate the phase of the optical wavefront.

Despite the higher security offered by strong PUFs, weak electronic PUFs are mostly preferred. The reason rests on their compatibility with the CMOS process, which enables their integration and reduces the costs and the power consumption.

The proposed optical PUFs, however, typically require bulky readout systems with precise alignment to realise high reliability. As a consequence, (1) the systems are typically complex, (2) their cost is high, (3) the proposed configurations have low integrability, and (4) the small tolerances make optical PUFs prone to error. Overcoming all these challenges is not straightforward, but efforts need to be made to realize strong PUFs compatible with electronic devices, especially in the context of Internet-of-Things (IoT) and wearable devices, which pose severe constraints on memory sizes and power consumption.

## DESCRIPTION OF THE INVENTION

The present invention discloses an acousto-optic system for generating physical unclonable functions (PUFs). The physical unclonable functions (PUFs) are defined as a physical object that implements a one-way mathematical function. In such one-way functions, each input condition (challenge) results in a unique deterministic response, generating challenge-response pairs.

Thus, PUFs can be used to provide digital identity to physical circuits and build secure authentication mechanisms.

To provide greater security to the system, it would be preferable that a high number of challenges could be generated, each resulting in a unique response. Thus, PUFs could be used as on-demand cryptographic key generators..

The acousto-optic system of the invention comprises:

   a) one or more coherent optical beam generators, configured to generate each one at least one optical beam;
   b) one or more acoustic wave generators configured to produce acoustic waves, and driven by one or more radiofrequency (RF) control signals; and
   c) one or more acousto-optic mediums connected to the acoustic wave generators and configured to diffract the optical beams generated tuning its properties as a function of frequency and amplitude of the acoustic waves, producing diffracted optical beams;
   d) one or more scattering mediums configured to scatter the diffracted optical beams, producing multiple scattered optical beams for each scattering medium; and
   e) a measuring device to measure the scattered optical beams.

Preferably, the properties of the optical beams generated that are tuned are diffraction angles, wavelength, optic phase and/or intensity as a function of frequency.

The acousto-optic mediums diffract the optical beams by means of an acousto-optical effect, that is, manipulation of light properties using acoustic waves.

This effect is produced due to the photoelastic properties of materials, by which the strain of an acoustic plane wave travelling through a medium causes variations in the refractive index of that medium. As a result, the acoustic waves create an optical grating, the characteristics of which depend on the photoelasticity of the medium, the strain of the acoustic wave, and its frequency.

The acousto-optic effect has been exploited to develop a series of devices such as optical modulators, beam deflectors, and frequency shifters. However, it has never been employed in the field of hardware security to develop physical unclonable functions (PUFs).

Then, the optical beam, diffracted by the acousto-optic mediums with acoustic waves propagating through it, is scattered by the scattering mediums.

Media producing optical diffusion or scrambling are easy to make and easy to probe, while remaining structurally stable. The speckle pattern resulting from the acousto-optic system of the invention is unfeasible to computationally simulate and physically clone. For this reason, optical PUFs exploiting these mechanisms are regarded as strong against tampering attacks.

Preferably, the one or more scattering mediums could be disordered three-dimensional microstructures with a size of the microstructures in the order of the optical beam's wavelength. These three-dimensional microstructures produce multiple coherent elastic scattering beams which interfere constructively and destructively, as a function of variations in its phase, resulting in a diffusion process.

More preferably, the one or more scattering mediums are selected from rough interfaces, which defines multiple propagation paths of travelling for the optical beam, or scattered mediums comprising a transparent matrix and scattering elements distributed randomly inside the transparent matrix.

Preferably, the scattering elements could be scattering particles or pores of the material.

In a preferred set of embodiments, the measuring device could comprise an output plane and an optical camera.

Also, in the acousto-optic system of the invention each acoustic wave generator could preferably comprise:

   - a transducer, configured to generate the acoustic waves as response to a radiofrequency (RF) control signal;
   - an electrode, connected to the transducer and configured to apply the radiofrequency (RF) control signal to the transducer, and
   - a bonding layer coupling the transducer and one of the acousto-optic mediums.

More preferably, the transducer could be a piezoelectric crystal, such as a transducer made of LiNbOa, or Quartz.

In preferred embodiments, the acousto-optic mediums and the acoustic wave generators could be combined in acousto-optic elements selected from: acousto-optic deflectors, acousto-optic modulators or acousto-optic tunable filters.

Also, the scattering mediums and the acousto-optic mediums could be combined in the form of acousto-optic mediums with rough-interfaces or comprising scattering elements randomly distributed in a transparent matrix, as defined before for the scattering mediums.

Also, for increasing the number of Ci-Ri pairs being more close to strong PUFs, multiple acousto-optic mediums and multiple acoustic wave generators could be arranged sequentially, each one tuning the generated optical beam.

In some preferred embodiments, the acousto-optic mediums could be configured to produce an interaction length (L) between the acoustic waves and the optical beams that meet the condition:

$$L \ll \frac{nv_a^2}{(2\pi\lambda f^2)}$$

Thus, producing a Raman-Nath diffraction, with a diffraction angle of each outcoming beam:

$$\theta_q = \theta_{in} + q\frac{\lambda f}{(nv_a)}$$

where $\theta_{in}$ is the angle of propagation of the incident optical wave with respect to the normal, $\lambda$ is the wavelength of the optical wave, f is the frequency of the acoustic wave, n is the refractive index of the medium, $v_a$ is the speed of sound in the acousto-optic mediums, and parameter q is the order of the diffraction, which can be a positive or a negative integer. Therefore, the diffracted pattern has symmetrical distribution of light intensity.

In such cases, the interaction length could be less than 1cm and the acoustic waves would be ultrasonic waves in the range of 0.1-100 MHz.

Alternatively, the acousto-optic mediums could be configured to produce an interaction length (L) between the acoustic waves and the optical beams that meet the condition:

$$L \gg \frac{nv_a^2}{(2\pi\lambda f^2)}$$

producing in this case a Bragg diffraction, with a diffraction angle of each outcoming beam:

$$\theta_q = \theta_{in} + q\frac{\lambda f}{(nv_a)}$$

where $\theta_{in}$ is the angle of propagation of the incident optical wave with respect to the normal, $\lambda$ is the wavelength of the optical wave, f is the frequency of the acoustic wave, n is the refractive index of the medium, $v_a$ is the speed of sound in the acousto-optic mediums, and parameter q is the order of the diffraction, which is q= $\pm$1, since diffraction only occurs when the coupled waves are perfectly phase matched.

In such cases, the acoustic waves could be ultrasonic waves in the range above 100 MHz.

In a preferred set of embodiments, the acousto-optic system could be implemented as a photonic integrated circuit (PIC). In such cases, the one or more acoustic wave generators comprise air-coupled ultrasound transducers or comb-shaped interdigital transducer electrodes (IDTs).

Also, the acousto-optic mediums and the scattering mediums are combined as photonic cavities configured to receive the acoustic waves and the optical beam generated and to lead the optical beam. The optical beams self-interfere in the photonic cavities. At the same time, the acoustic waves produce a periodic variation of the refractive index along the photonic cavities changing the travel path of the scattered optical beams.

Preferably, the acoustic wave generators comprise the comb-shaped interdigital transducer electrodes (IDTs) and the photonic cavities are located between the electrodes of the IDT.

Also, the photonic cavities could be made of wide waveguides, photonic crystals or chaotic cavities.

The invention also relates to a method for generating physical unclonable functions (PUFs) which uses the acousto-optic system of the invention as defined. The method of the invention comprises the steps of:

- generating a coherent optical beam directed to the acousto-optic medium;
- generating acoustic waves by means of the acoustic wave generator according to a radiofrequency (RF) control signal;
- tuning the propagation direction, wavelength and/or intensity of the optical beam generated as a function of the frequency and amplitude of the acoustic waves passing through the acousto-optic medium;
- determining as a challenge (Ci) the conditions of the tuned optical beam;
- scattering the tuned optical beam, which passes through the scattering medium;
- measuring the optical beams scattered by means of the measuring device, generating a speckle pattern;
- determining the speckle pattern as a response (Ri) to the challenge (Ci).

Preferably, multiple challenge-response (Ci-Ri) pairs could be generating by varying the radiofrequency (RF) control signal. Thus, the acoustic waves vary its frequency and/or amplitude, producing a different modification in the acousto-optic medium. Then, the optical beam passing through the acousto-optic medium would be tuned in a different way, determining a new propagation direction, wavelength and/or intensity, i.e. a new challenge (Ci).

The tuned optical beam, as a challenge (Ci), will generate a unique speckle pattern as a response (Ri) to said challenge (Ci) passing through the scattering medium..

Alternatively, new physical unclonable function (PUF) could be generated by moving the optical beam generator. This movement will change the assembly of photon walks followed by the tuned optical beam and produce a different speckle pattern.

While the speckle pattern obtained using the method of the invention displays a seemingly random distribution of optical intensity in the speckle pattern, this output is deterministic and extremely sensitive to variations of the challenge (Ci).

The method of the invention could be applied to one or more coherent optical beam generators, one or more acoustic wave generators driven by one or more radiofrequency (RF) control signals, one or more acousto-optic mediums, and/or one or more scattering mediums as defined in the description of the system of the invention.

The advantages of the proposed PUF are:

- High number of challenge-response (Ci-Ri) pairs. The challenges are generated using an RF electrical signal. Multiple modulation techniques of that RF signal can be employed to generate multiple challenges (frequency, amplitude, phase, etc.). These electrical signals are used to control the properties of the acoustic waves that will transform the tuned optical beam and produce multiple different responses. Hence, a high number of challenge-response (Ci-Ri) pairs can potentially be achieved with this method. Moreover, the number of challenges can be also increased by concatenating acousto-optic devices driven by one or more RF signals, as defined before.

- Reduced complexity. The proposed method employs a simple readout system that does not require precision alignment stages and is lens-free. In addition, the acousto-optic effect has been well studied and exploited in other research areas, such as communications, spectroscopy, and biomedical imaging. Hence, the proposed method can make use of a range of devices already commercialized and well researched techniques readily available.

- Integrability. As shown in the description of the system of the invention, no mechanical stages are required to operate the system. This is an important advantage, since mechanical parts are bulky and difficult to integrate. Hence, the proposed method can enable the miniaturization of PUFs. Acousto-optic deflectors have been demonstrated in integrated microtechnologies and, thus, this method could be implemented in a chip.

- Increased reliability. No moving parts are employed by this technique. Moreover, no alignment is required between the optical beam generator and the scattering medium. As a consequence, the reliability of the responses is less prone to error, which is usually caused by the precise alignment tolerances incurred by state-of-the-art methods. This also relieves the system of employing error correction methods to increase the reliability of the system, thus making it more convenient for IoT and wearable devices with restricted computation and consumption capabilities.

**DESCRIPTION OF THE DRAWINGS**

Figure 1. Shows a) a Raman-Nath diffraction in an isotropic medium due to the interaction between an optical beam and an acoustic wave, and b) an acousto-optic device wherein an electrical radiofrequency signal modulates an optical beam.

Figure 2. Shows a speckle formation produced by the interaction of a coherent optical beam with a) a rough interface (dashed lines indicate possible trajectories of photons inside a disordered medium), b) a transparent medium containing scattereing particles; and it is shown c) a speckle pattern produced by multiple scattering interference particles.

Figure 3. Schematic illustration of the proposed acousto-optic system exploiting the acousto-optic effect for generating challenges to a scattering medium.

Figure 4. First proposed implementation: an acousto-optic medium to generate multiple challenges to an optical scattering medium.

Figure 5. Second proposed implementation: a series of acousto-optic mediums employed to generate a higher number of challenge-response (Ci-Ri) pairs.

Figure 6. Third proposed implementation: the acousto-optic effect is obtained by combining the acousto-optic medium and the scattering medium to generate challenge-response (Ci-Ri) pairs.

Figure 7. Fourth proposed implementation: implementation of the acousto-optic system of the invention in a photonic integrated circuit (PIC).

Figure 8. Schematic representation of the optical setup employed for the acousto-optic system of the invention.

Figure 9. Extracted keys (responses) for each challenge (450, 480, 488, 500, 532, 550, 532 and 550 nm) obtained using the acousto-optic system of the invention.

Figure 10. Extracted keys (responses) for each challenge (555, 633, 650, 670 and 690 nm) obtained using the acousto-optic system of the invention.

Figure 11. Calculated Hamming Distance for a 256 bit strings extracted consecutively using the same challenge (633 nm).

Figure 12. Calculated Hamming Distance for a 256 bit string extracted using different challenges (450, 480, 488, 500, 532, 550, 555, 570, 633, 650, 670 and 690 nm).

Figure 13. Calculated Hamming Distance for 3 different PUFs using the same challenge.

## PREFERRED EMBODIMENTS OF THE INVENTION

The invention relates to an acousto-optic system for generating physical unclonable functions (PUFs).

The acousto-optic system of the invention comprises:

a) a coherent optical beam generator (1), configured to generate an optical beam (2);
b) an acoustic wave generator (3) configured to produce acoustic waves (4), and driven by one or more radiofrequency (RF) control signals;
c) an acousto-optic medium (5) connected to the acoustic wave generator (3) and configured to diffract the optical beam (2) generated tuning a propagation direction, a wavelength and/or an intensity as a function of frequency and amplitude of the acoustic waves (4), producing diffracted optical beams (6);
d) a scattering medium (7) configured to scatter the diffracted optical beams (6), producing multiple scattered optical beams (8); and
e) a measuring device (9) to measure the scattered optical beams (8).

The acoustic waves (4) induce variations in the optical properties of the acousto-optic medium (5) due to the photoelastic effect. In the case of a travelling acoustic wave (4), this acousto-optic interaction generates a periodic variation of the refractive index of the acousto-optic medium (5). The period and the amplitude of the refractive index variation are directly related to those of the acoustic wave (4). For an incident optical beam (2), this periodic structure acts as an optical grating.

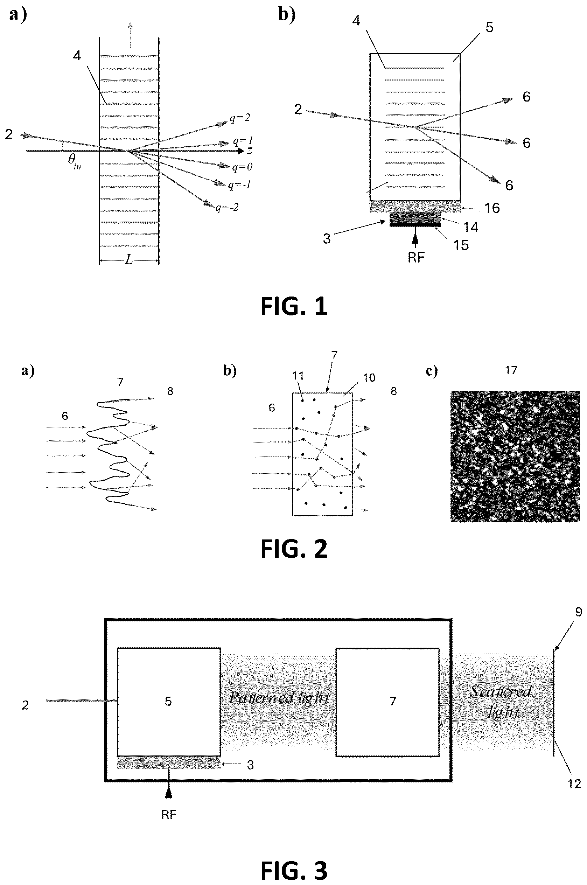

In an isotropic medium, when an incident optical plane wave, optical beam (2), propagates in a direction close to normal to the optical grating (i.e., close to perpendicular to the direction of propagation of the acoustic plane wave (4)), light is diffracted in multiple beams (6), as shown in figure 1A. This is known as the Raman-Nath diffraction, and the diffraction angle of each outcoming beam is described as

$$\theta_q = \theta_{in} + q \frac{\lambda f}{(n v_a)}$$

where $\theta_{in}$ is the angle of propagation of the incident optical beam (2) with respect to the normal, $\lambda$ is the wavelength of the optical beam (2), f is the frequency of the acoustic wave (4), n is the refractive index of the acousto-optic medium (5), and $v_a$ is the speed of sound in that acousto-optic medium (5). The parameter q is the order of the diffraction, which can be a positive or a negative integer, which implies that the diffracted pattern (6) has symmetrical distribution of light intensity.

In addition, for the Raman-Nath diffraction to occur, the interaction length (L) between the acoustic wave (4) and the optical beam (2) meets the condition:

$$L \ll \frac{n v_a^2}{(2\pi\lambda f^2)}$$

Hence, at short interaction lengths (<1cm), the acoustic waves (4) are typically ultrasonic waves in the 0.1-100 MHz range.

Ultrasonic acoustic waves (4) can be generated using piezoelectric transducers (14).

A piezoelectric transducer (14) consists of a piezoelectric crystal (e.g., $LiNbO_3$) that transforms a radiofrequency (RF) electric signal applied through an electrode (15) into an acoustic wave (4) that is coupled to an acousto-optic medium (5) through a bonding layer (16), as shown in Figure 1B.

Therefore, the frequency and amplitude of the acoustic wave (4) can be easily controlled electronically to vary the diffraction angles, wavelengths, and the intensities of the diffracted optical beams (6) to tune the diffracted pattern.

In the particular case where the interaction length (L) is large, such that

$$L \gg \frac{n v_a^2}{(2\pi\lambda f^2)}$$

the effect is known as Bragg diffraction.

In this case, the incident optical beam (2) is only coupled to the diffraction orders q=±1, since the diffraction only occurs when the coupled optical beam (2) and acoustic waves (4) are perfectly phase matched. As a consequence, this type of diffraction requires acoustic waves (4) generated by ultrasonic transducers (14) operating above 100 MHz.

The acousto-optic system of the invention is used for generating strong acousto-optical PUFs based on scattering media.

The coherent optical beam generator (1) generates a coherent optical beam (2) of wavelength $\lambda$ and propagation constant $k=2\pi n/\lambda$, with a spot size $2\omega_0 \gg \lambda$ measured as the $1/e^2$ beam width.

The scattering medium (7) is a medium containing a disordered three-dimensional microstructure produced by either a rough interface some way along the propagation path of the travelling optical wave, as shown in Figure 2A, or by scattering particles (11) distributed randomly inside a transparent matrix (10), as shown in Figure 2B.

When the size of the microstructures is in the order of the optical beam's (2) wavelength, the statistical properties of the scattering medium (7) can be regarded as an assembly of random photon walks.

Then, multiple coherent elastic scattered beams (8) are produced, which can be seen as a decomposition of the incident optical radiation in multiple partial beams with unique travel paths. These coherent partial beams (8) emerging from the disordered scattering medium (7) will interfere constructively and destructively, given the slight variations in phase among the partial beams (8). Hence, the result of this multiple scattering interference can be regarded as a diffusion process and observed at an output plane (12) as an optical intensity map displaying a particular distribution, known as speckle pattern (17), an example of which is shown in Figure 2C.

While the speckle pattern displays a seemingly random distribution of optical intensity, this output is extremely sensitive to variations of the characteristics of the optical beam (2). For example, assuming a physical medium with a cross section much larger than the optical beam generator (1), displacing the optical beam generator (1) by a magnitude in the order of the spot size will change the assembly of photon walks and produce a different speckle pattern. This phenomenon is exploited to derive multiple signatures of the physical medium, which are used for robust identification purposes.

The conditions of the optical beam (2) are determined as a challenge (Ci), being the index i an integer distinguishing the different challenges. The measured output, the speckle pattern (17), is registered as the response (Ri) to that challenge. A reliable PUF meets the condition that the challenge-response pairs (CRPs) can be reproduced over time and are, to an extent, immune to environmental variations.

Here, the acousto-optic effect is proposed as a mean of generating challenges to optical scattering media. As described in the previous section, the acousto-optic effect enables the control of the frequency, propagation direction, and optical intensity, via the efficiency of the diffraction coupling, of an optical beam (2). This is achieved using an RF signal driving an acoustic wave generator (3).

The different states of light after passing through the acousto-optic medium (5) can be used as challenges (Ci) to probe the scattering medium (7). An illustration of this is shown in Fig. 3.

Now, some possible preferred implementations of the proposed PUF are described.

Implementation 1:

The first proposed implementation comprises an acousto-optic element, the acousto-optic medium (5) and the acoustic wave generator (3), to control the optical properties of an optical beam (2). Such acousto-optic element can be an acousto-optic deflector, an acousto-optic modulator, an acousto-optic tunable filter, or a similar device. In any case, an optical beam generator (1), in this case a light source, would provide the optical beam (2) and a RF signal would drive the acousto-optic element to control the optical properties of the said optical beam (2).

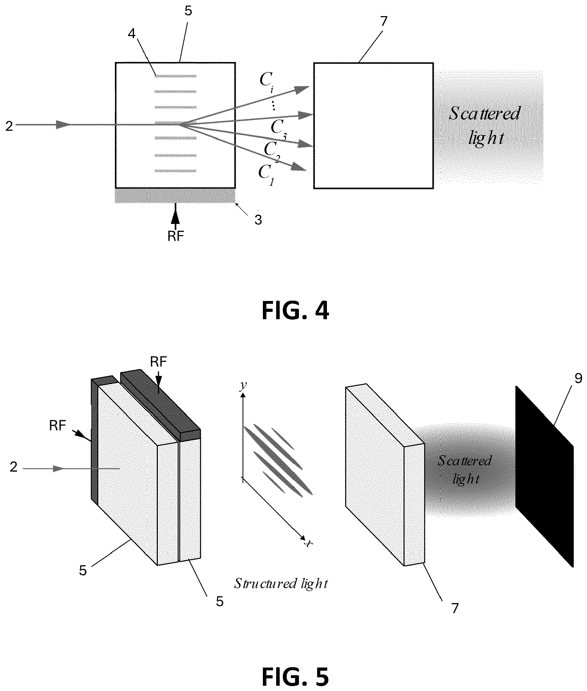

All the different states of the optical beam (2) after propagating through the acousto-optic medium (5) would correspond to a different challenge (Ci). A scattering medium (7) placed after the acousto-optic medium (5) would be probed by each of these states, generating a unique response (Ri) in each case. This first proposed implementation is illustrated in Fig. 4.

Implementation 2:

The second proposed implementation comprises multiple acousto-optic elements, such as acousto-optic modulators, acousto-optic deflectors, acousto-optic tunable filters and similar devices. The multiple acousto-optic elements are configured to generate a higher number of challenge-response (Ci-Ri) pairs by combining multiple RF signals, each driving a single acousto-optic element.

This configuration allows, for example, producing multiple different light patterns by placing a series of acousto-optic deflectors in sequence, such that an incident optical beam (2) will suffer subsequent diffractions at each acousto-optic medium. An illustration of this idea is shown in Fig. 5.

Implementation 3:

The third implementation consists of combining the acousto-optic element and the scattering medium (7) in a single entity, that is, the acousto-optic wave (4) is applied to an acousto-optic medium that may have a rough interface or contain scattering particles (11) randomly distributed across a transparent matrix (10) which causes the diffusion of light.

In this configuration, an incident optical beam (2) gets simultaneously scattered by the disordered three-dimensional microstructure and diffracted by its interaction with the acousto-optic wave (4).

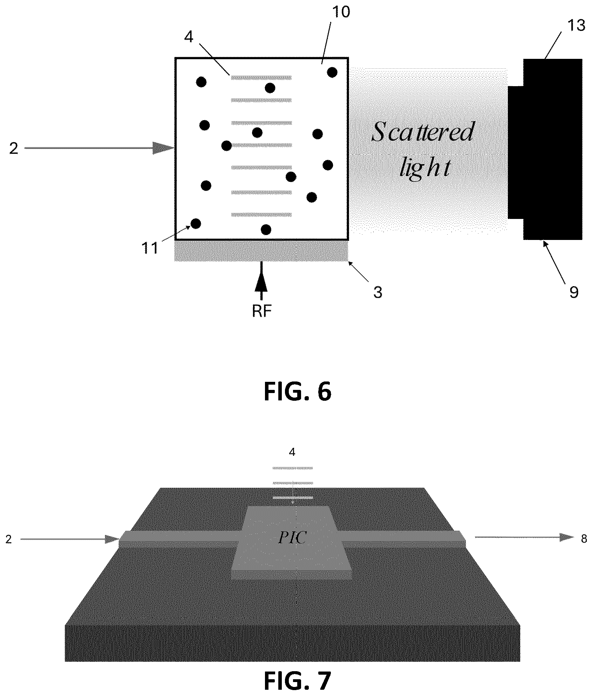

Again, an RF signal would be used to generate different challenges. An illustration of the third proposed implementation is shown in Fig. 6.

Implementation 4:

The final configuration proposes the implementation of the acousto-optic PUF in a photonic integrated circuit (PIC). PICs allow the miniaturization of optical systems similarly to microelectronic chips in the case of electronic circuits. Moreover, the manufacture of PICs employs CMOS-compatible processes, benefiting from its large-scale production capabilities. Hence, the implementation of a PUF in a PIC enables its mass production, while reducing its cost and energy consumption. Another advantage of PUFs implemented in PICs is the simplification of the optical system, which is less exposed to environmental effects and thus enhances the reliability of the responses.

Several photonic integrated PUFs have already been demonstrated, which exploit the chaotic scattering of light inside photonic cavities or the multiple interference of light in disordered structures. The propagation of acoustic signals has also been demonstrated in thin films. These are known as surface acoustic waves (SAW), whose particle motion is perpendicular to the acoustic wave (4) propagation. SAWs can be generated on the surface of a PIC using an air-coupled ultrasound transducer (14).

As an alternative, SAWs can be generated on chip using comb-shaped interdigital transducer electrodes (IDTs) (14) excited by an RF signal.

The acousto-optic effect has also been demonstrated on a PIC and exploited for achieving integrated acousto-optic modulators, by using SAWs to alter the refractive index in one of the branches of a Mach-Zehnder interferometer.

Hence, an acousto-optic PUF could be implemented in a PIC. Such PUF would comprise a photonic cavity, that could be made of a wide waveguide or a photonic crystal, where light would self-interfere.

The photonic cavity would be located between the electrodes of the IDT (14) in a way that the RF-driven acoustic waves (4) would disturb the photonic structure. The periodic variation of the refractive index along the photonic cavity would change the travel path of the guided optical beams, hence resulting in a different response. By varying the properties of the RF signal, multiple challenge-response (Ci-Ri) pairs could be generated. The idea of this fourth configuration is illustrated in Fig. 7.

In the following, preliminary experimental results corresponding to the first implementation are presented.

In this case, a supercontinuum laser source (SCLS, SC400 femtopower 1060 supercontinuum laser, Fianium Ltd, United Kingdom) was used as an optical beam generator (1). The wavelength range of this source spanned from 450 nm to 1100 nm. The output power of the laser source ranged from 1 to 4 W.

An acousto-optic tunable filter (AOTF) (AOTF Gooch & Housego, United Kingdom) operated by an RF driver was used to select a specific wavelength within the spectrum of the supercontinuum laser source. Also, in this case, the acousto-optic system also comprises an iris diaphragm (18), used to control the spot size of the collimated output.

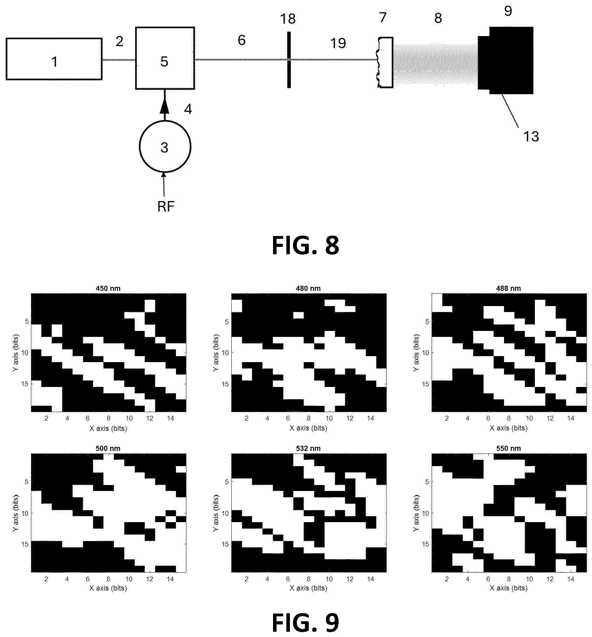

An optical diffuser, made of ground N-BK7 glass (DG10-120, Thorlabs, USA), was used as scattering medium (7) and a CMOS camera (13) (CS165MU1/M, Thorlabs, USA) was employed to record the transmitted optical intensity, speckle pattern (17). A schematic representation of the optical setup is shown in Fig. 8.

The RF driver was used to select a range of monochromatic laser beam probes: 450, 480, 488, 500, 532, 550, 555, 570, 633, 650, 670 and 690 nm. In addition, it was employed to select a simultaneous combination of wavelengths: 480&690, 480&670, and 490&680 nm.

The camera (13) was configured to acquire the transmitted optical intensity at an output plane (12) 10 cm away from the optical diffuser (along the propagation axis). The acquired image had a size of 5x4 mm2, divided in 1440x1080 pixels. This camera has a relatively high quantum efficiency in the 400-700 nm wavelength range. The exposure time was automatically selected for each image. A series of 100 consecutive images were acquired at a frame rate of 34.8 fps.

In order to convert the raw optical intensity map into a bit strain usable as a cryptographic key, the following processing is employed. First, the intensity map, I(x,y), is normalised to remove variations in ambient light. Then, the image is low-pass filtered, In(x,y), such that the number of pixels of the filtered images match the desired number of bits in the string.

In this case, the desired bit string was 256 bit long. After this, the Gabor Transform is applied using the following equation:

$$GT_n = \iint I_n(x,y)g(x,y,f,\theta)dxdy$$

where g(x,y,f,θ) is the Gabor filter which is sensitive to textures in the image along the orientation θ and at a frequency f. The result of this operation is a binary image where the rows can be concatenated to obtain a bit string.

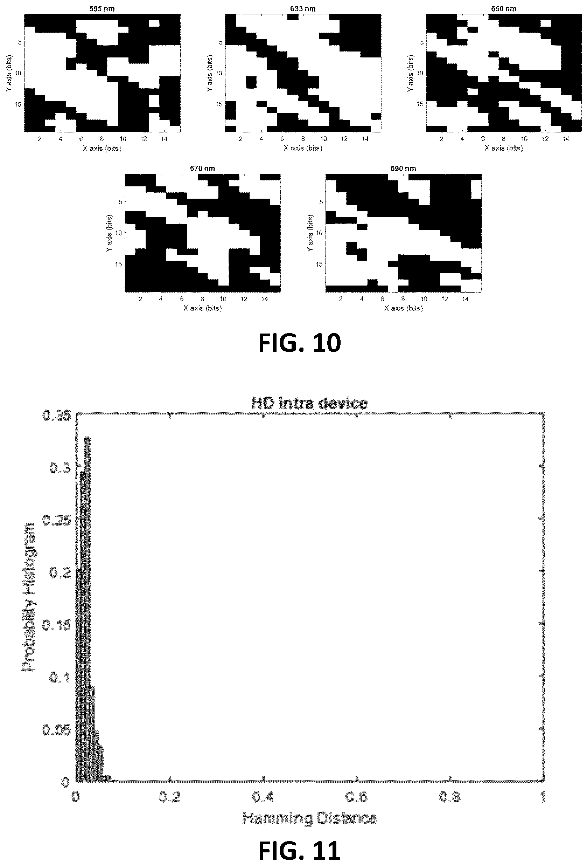

The Figures 9 and 10 contain a sample of different responses (Ri) experimentally obtained using unique challenges (Ci) (450, 480, 488, 500, 532, 550, 532, 550, 555, 633, 650, 670 and 690 nm). As it can be seen, all the different responses (Ri) are unique.

To quantify the performance of the acousto-optic PUF, the Hamming Distance of the responses (Ri) is calculated. This consists of a comparison of two bit strings (with a number of elements s), counting the number of bits that are different.

$$HD = \sum \frac{B_i \neq B_j}{s}$$

First, the HD has been computed for the 100 responses (Ri) generated consecutively using the same challenge (Ci). Equal responses should result in HD=0. The result is shown in Fig. 11. As it can be seen, the mean HD is 0.02. This value is close to 0, meaning that the bit strings are similar. However, due to some noise, the responses (Ri) are not exactly equal. It must be noted that in these results no error correction techniques have been employed. Thus, further processing can reduce the number of error bits.

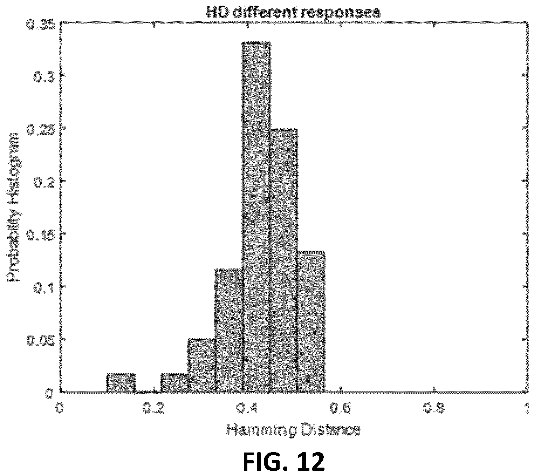

Then, the HD was calculated among all the different responses (Ri) generated using different challenges (Ci). Completely different responses should result in HD=0.5. The result can be seen in Fig. 12. The mean HD is 0.4, which means that the responses are quite different. However, there are some cases where the responses share similarities, such as the responses for the probing wavelengths 550 and 555 nm, in which case HD=0.14. This is because the wavelengths are not sufficiently spaced, and the responses (Ri) are correlated. Hence, this result can be used to deduce the minimum wavelength step required to generate uncorrelated responses (Ri).

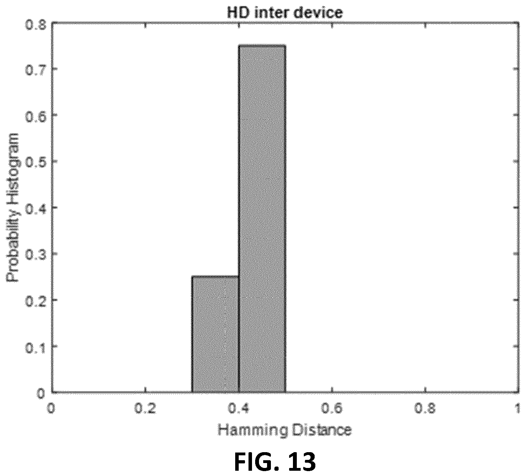

Lastly, the HD was calculated for the responses (Ri) generated by the same challenge (Ci) using three different PUFs. Again, in this case, different PUFs should result in HD=0.5. The result can be seen in Fig. 13. The mean HD experimentally measured was 0.45. This demonstrates that different PUFs produce unique and different responses (Ri) using this method.

**Claims**

1. An acousto-optic system for generating strong physical unclonable functions (PUFs) comprising:

   f) one or more coherent optical beam generators (1), configured to generate each one at least one optical beam (2);
   g) one or more acoustic wave generators (3) configured to produce acoustic waves (4), and driven by one or more radiofrequency (RF) control signals;
   h) one or more acousto-optic mediums (5) connected to the acoustic wave generators (3) and configured to diffract the optical beams (2) generated tuning its diffraction angles, wavelength, optic phase and/or intensity as a function of frequency and amplitude of the acoustic waves (4), producing diffracted optical beams (6);
   i) one or more scattering mediums (7) configured to scatter the diffracted optical beams (6), producing multiple scattered optical beams (8) for each scattering medium (7); and
   j) a measuring device (9) to measure the scattered optical beams (8).

2. The acousto-optic system according to claim 1, wherein the one or more scattering mediums (7) comprises disordered three-dimensional microstructures with a size of the microstructures in the order of the optical beam's wavelength producing multiple coherent elastic scattered optical beams (8) which interfere constructively and destructively, due to slight variations in phase among them.

3. The acousto-optic system according to claim 2, wherein the one or more scattering mediums (7) are selected from a rough interface, defining multiple propagation paths of the travelling for the optical beam, or a scattered medium comprising a transparent matrix (10) and scattering elements (11) distributed randomly inside the transparent matrix (10).

4. The acousto-optic system according to claim 1, wherein the measuring device (9) comprises an output plane (12) and an optical camera (13).

5. The acousto-optic system according to claim 1, wherein each acoustic wave generator (2) comprises:

   - a transducer (14), configured to generate the acoustic waves (4) as response to a radiofrequency (RF) control signal;
   - an electrode (15), connected to the transducer (14) and configured to apply the radiofrequency (RF) control signal to the transducer (14), and
   - a bonding layer (16) coupling the transducer (14) and one of the acousto-optic medium (5).

6. The acousto-optic system according to claim 5, wherein the transducer (14) is a piezoelectric crystal.

7. The acousto-optic system according to claim 1, wherein the acousto-optic mediums (5) and the acoustic wave generators (3) are combined in acousto-optic elements selected from: acousto-optic deflectors, acousto-optic modulators or acousto-optic tunable filters.

8. The acousto-optic system according to claim 1, wherein the scattering mediums (7) and the acousto-optic mediums (5) are combined as acousto-optic mediums with rough-interface or comprising scattering elements (11) randomly distributed in a transparent matrix (10).

9. The acousto-optic system according to claim 1, wherein multiple acousto-optic mediums (5) and multiple acoustic wave generators (3) are arranged sequentially, each one tuning the generated optical beam (2).

10. The acousto-optic system according to claim 1, wherein acousto-optic mediums are configured to produce an interaction length (L) between the acoustic waves and the optical beams that meet the condition:

$$L \ll \frac{nv_a^2}{(2\pi\lambda f^2)}$$

producing a Raman-Nath diffraction, with a diffraction angle of each outcoming beam:

$$\theta_q = \theta_{in} + q\frac{\lambda f}{(nv_a)}$$

where $\theta_{in}$ is the angle of propagation of the incident optical wave with respect to the normal, $\lambda$ is the wavelength of the optical wave, f is the frequency of the acoustic wave, n is the refractive index of the medium, $v_a$ is the speed of sound in the acousto-optic mediums, and parameter q is the order of the diffraction, which can be a positive or a negative integer.

11. The acousto-optic system according to claim 1, wherein acousto-optic mediums are configured to produce an interaction length (L) between the acoustic waves and the optical beams that meet the condition:

$$L \gg \frac{nv_a^2}{(2\pi\lambda f^2)}$$

producing a Bragg diffraction, with a diffraction angle of each outcoming beam:

$$\theta_q = \theta_{in} + q\frac{\lambda f}{(nv_a)}$$

where $\theta_{in}$ is the angle of propagation of the incident optical wave with respect to the normal, $\lambda$ is the wavelength of the optical wave, f is the frequency of the acoustic wave, n is the refractive index of the medium, $v_a$ is the speed of sound in the acousto-optic mediums, and parameter q is the order of the diffraction, which is q=$\pm$1.

12. The acousto-optic system according to claim 1, implemented as a photonic integrated circuit (PIC), wherein the one or more acoustic wave generators (3) comprise air-coupled ultrasound transducers (14) or comb-shaped interdigital transducer electrodes (IDTs) (14), and the acousto-optic mediums (5) and the scattering mediums (7) are combined as photonic cavities configured to receive the acoustic waves (4) and the optical beam (2) generated and to lead the optical beam (2) to self-interfere, such that the acoustic waves (4) produce a periodic variation of the refractive index along the photonic cavities changing the travel path of the scattered optical beams (8).

13. The acousto-optic system according to claim 12, wherein the one or more acoustic wave generators (3) comprise the comb-shaped interdigital transducer electrodes (IDTs) (14) and the photonic cavities are located between said electrodes.

14. The acousto-optic system according to claim 12, wherein the photonic cavities are made of wide waveguides, photonic crystals or chaotic cavities.

15. A method for generating strong physical unclonable functions (PUFs) which uses the acousto-optic system according to any of claims 1 to 14, comprising:

- generating a coherent optical beam (2) directed to the acousto-optic medium (5);
- generating acoustic waves (4) by means of the acoustic wave generator (3) according to a radiofrequency (RF) control signal;
- diffracting the optical beam (2) generated, tuning its diffraction angles, wavelength and/or intensity as a function of the frequency and amplitude of the acoustic waves (4) passing through the acousto-optic medium (5);
- determining as a challenge (Ci) the conditions of the diffracted optical beams (6);
- scattering the diffracted optical beams (6) passing through the scattering medium (7);
- measuring the scattered optical beams (8) by means of the measuring device (9), generating a speckle pattern (17); and
- determining the speckle pattern (17) as a response (Ri) to the challenge (Ci).

**FIG. 1**

**FIG. 2**

**FIG. 3**

**FIG. 4**

**FIG. 5**

10

4

2

Scattered light

13

11

3

RF

9

**FIG. 6**

4

2

PIC

8

**FIG. 7**

**FIG. 8**

**FIG. 9**

FIG. 10

FIG. 11

FIG. 12

**FIG. 13**

Europäisches
Patentamt

European
Patent Office

Office européen
des brevets

## EUROPEAN SEARCH REPORT

**Application Number**

EP 24 38 2586

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2016/377423 A1 (EILERS HERGEN [US] ET AL) 29 December 2016 (2016-12-29) <br> * figure 1A * <br> * figure 9A * <br> * figure 10A * <br> * paragraph [0068] * <br> * paragraph [0072] - paragraph [0073] * <br> * paragraph [0076] * <br> ----- | 1-15 | INV. <br> H04L9/08 <br> H04L9/32 <br> G02F1/11 <br> H01S3/106 |
| Y | US 2009/147344 A1 (LOVERING DAVID [GB] ET AL) 11 June 2009 (2009-06-11) <br> * figure 3 * <br> * figure 4 * <br> * paragraph [0020] * <br> * paragraph [0025] * <br> * paragraph [0038] * <br> ----- | 1-15 | |
| Y | US 2013/243187 A1 (HORSTMEYER ROARKE [US] ET AL) 19 September 2013 (2013-09-19) <br> * figure 1 * <br> * figure 7 * <br> * paragraph [0068] - paragraph [0072] * <br> * paragraph [0231] * <br> ----- | 1-15 | TECHNICAL FIELDS SEARCHED (IPC) <br><br> H04L <br> G02F <br> H01S |

The present search report has been drawn up for all claims

| Place of search | Date of completion of the search | Examiner |
|---|---|---|
| Munich | 21 October 2024 | Caragata, Daniel |

EPO FORM 1503 03.82 (P4C01)

## ANNEX TO THE EUROPEAN SEARCH REPORT
## ON EUROPEAN PATENT APPLICATION NO.

EP 24 38 2586

This annex lists the patent family members relating to the patent documents cited in  the above-mentioned European search report.
The members are as contained in the European Patent Office EDP file on
The European Patent Office is in no way liable for these particulars which are merely given for the purpose of information.

21-10-2024

| Patent document cited in search report | Publication date | Patent family member(s) | | Publication date |
|---|---|---|---|---|
| US 2016377423 A1 | 29-12-2016 | NONE | | |
| US 2009147344 A1 | 11-06-2009 | US | 2009147344 A1 | 11-06-2009 |
| | | WO | 2007100433 A2 | 07-09-2007 |
| US 2013243187 A1 | 19-09-2013 | NONE | | |

EPO FORM P0459

For more details about this annex : see Official Journal of the European Patent Office, No. 12/82